# EUROPÄISCHE PATENTSCHRIFT

(11) **EP 1 045 775 B1**
(45) Veröffentlichungstag und Bekanntmachung des Hinweises auf die Patenterteilung: **04.09.2002**
(21) Anmeldenummer: 99900006.0
(22) Anmeldetag: 06.01.1999
(51) Int. Cl.: B60R 13/02, B60R 13/08, G10K 11/172

(54) **SCHWERSCHICHTFREIES UND SELBSTTRAGENDES MONTAGEPAKET**
SELFSUPPORTING ASSEMBLY WITHOUT A HEAVEY LAYER
ASSEMBLAGE AUTOPORTEUR SANS COUCHE LOURDE

(30) Priorität: 09.01.1998 CH 3498
(43) Veröffentlichungstag der Anmeldung: 25.10.2000
(73) Patentinhaber: RIETER AUTOMOTIVE (INTERNATIONAL) AG, CH-8702 Zollikon (CH)
(72) Erfinder: ALTS, Thorsten, D-64401 Gross-Bieberau (DE)
(74) Vertreter: Graf, Seifert & Partner
(86) Internationale Anmeldenummer: CH9900005
(87) Internationale Veröffentlichungsnummer: WO99035007

(56) Entgegenhaltungen:
- EP-A- 0 352 993
- EP-A- 0 787 578
- WO-A-92/12855
- DE-A- 19 627 106
- DE-U- 29 607 262
- FR-A- 2 727 189
- PATENT ABSTRACTS OF JAPAN vol. 11, no. 102 (M-576) [2549], 31. März 1987 (1987-03-31) & JP 61 249853 A (MAZDA MOTOR CORP.), 7. November 1986 (1986-11-07)

## Beschreibung

Die vorliegende Erfindung betrifft Schwerschichtfreies und Selbsttragendes Montagepaket für für Motorfahrzeuge gemäss Oberbegriff des Anspruchs 1.

Grossflächige Fahrzeugteile, wie Bodenblech, Dachblech, Motorhaube, Kofferraumdeckel oder Türen und Seitenverkleidungen neigen aufgrund ihrer geringen Eigenstabilität dazu, sich beim Fahren zu deformieren, zu vibrieren und zu schwingen. Diesem Verhalten wird konventioneller Weise durch das Anbringen von Dämpfungsmaterial, insbesondere von Bitumenschwerschichten entgegengewirkt. Um die Uebertragung von Fahrgeräuschen ins Wageninnere zu reduzieren, werden in der Automobilindustrie seit längerem mehrschichtige Schallisolationspakete eingesetzt. Diese Schallisolationspakete sind in der Regel als Feder-Masse-Systeme konzipiert und weisen alle eine mit einer elastischen Federschicht gekoppelte Schwerschicht auf, um die Vibrationen der grossflächigen Karosserieteile zu dämpfen und den Luftschalldurchgang zu dämmen.

Ein solches Schallisolationspaket ist beispielsweise in der EP-0'334'178 beschrieben und umfasst im wesentlichen eine dem schwingfähigen Karosserieteil zugewandte, weichelastische Schaumstoffschicht, welche als Feder des Feder-Massesystems wirkt, eine als Masse des Feder-Masse-Systems wirkende, nahezu kompakte, luftundurchlässige Schicht aus demselben Material, sowie eine darüber angeordnete Dekorresp. Teppichschicht. Durch diesen Aufbau kann das Gewicht der Schwerschicht um bis zu 40% reduziert werden und kann damit auch das Gewicht des gesamten Schallisolationssystems gegenüber den bekannten Feder-Masse-Systemen, allerdings mit Einbussen bei der akustischen Wirksamkeit, reduziert werden. Generell führen Feder-Masse-Anordnungen immer zu Resonanzeinbrüchen in der Schallisolation, die regelmässig im Frequenzbereich der niederen Motorordnungen liegen und dort besonders unerwünscht sind. Dieses Phänomen verbietet also grundsätzlich eine extreme Leichtbauweise.

Es ist jedoch das generelle Bestreben der Automobilindustrie das Gewicht der Fahrzeuge und insbesondere der Innenausstattungen weiter zu reduzieren. Es ist deshalb in der PCT/CH 96/00381 vorgeschlagen worden, ein schallisolierendes Bauteil zu schaffen, welches über 50% leichter ist, als herkömmliche Schallisolationspakete. Der Aufbau dieses Bauteils unterscheidet sich von den oben beschriebenen Isolationspaketen dadurch, dass die Schwerschicht der konventionellen Feder-Masse-Systeme durch eine leichtgewichtige, relativ dünne, mikroporöse und steife Faserschicht ersetzt ist und dem Strömungsverhalten der Luft im Grenzbereich zwischen Karosserieteil und Montagepaket besondere Aufmerksamkeit geschenkt wird. Damit wird grundsätzlich der relativ schwergewichtige Dämmungsmechanismus der herkömmlichen Feder-Masse-Systeme zugunsten einer leichtgewichtigen und effizienten Schallabsorptionsfähigkeit reduziert.

Es ist darüber hinaus das Bestreben der Automobilindustrie die Fahrzeuge im Innenraum auch mit schockabsorbierenden Mitteln auszurüsten, um die Passagiere im Falle einer Fahrzeugkollision vor schwereren Verletzungen möglichst zu bewahren. Dazu werden heute die Fahrgastzellen mit einer schockabsorbierenden Verkleidung ausgerüstet. Solche Verkleidungen umfassen in der Regel eine mehr oder weniger teure Teppichlage, die mit einer schockabsorbierenden Schicht hinterlegt ist. Diese schockabsorbierenden Innenverkleidungen sind geeignet, um die Aufprallenergie von 90 Joule und Kraftstösse von weniger als 400 daN vollständig zu absorbieren. Auch diese Verkleidungen sind als Feder-Masse-Systeme aufgebaut und weisen deren bekannte Nachteile auf. Darüberhinaus weisen diese kombinierten schock- und schallabsorbierenden Verkleidungen eine unerwünscht grosse Dicke auf. Es ist deshalb in der CH 1415/96 auch schon vorgeschlagen worden, ein dünnes Verkleidungsteil mit verbesserten schall- und schockabsorbierenden Eigenschaften zu schaffen. Auch dieses System verhält sich im wesentlichen als ein Feder-Masse-System und macht zusätzlich Gebrauch von dissipativen Mechanismen im Grenzbereich zwischen Karosserieteil und Isolationsteil.

Aus der US-4'479'992 sind auch schallabsorbierende Bauteile bekannt, die nicht als Feder-Masse-System konzipiert sind. Diese Bauteile weisen eine wabenförmige Struktur auf, welche mit mindestens einem offenporigen Vlies abgedeckt ist. Diese Bauteile sind verhälnismässig voluminös und lassen sich in einfacher Weise verformen, d.h. eignen sich nicht als Schockabsorber.

Ein Montagepacket gemäss dem Oberbegriff des Anspruchs 1 ist aus DE-A-196 27 106 bekannt.

Es ist Aufgabe der vorliegenden Erfindung, ein Montagepaket zu schaffen, welches die Eigenschaften der herkömmlichen Schallisolationen und Schockabsorber kombiniert, ohne deshalb schwerer und voluminöser als dieselben zu sein.

Dies wird erfindungsgemäss durch ein Montagepaket mit den Merkmalen des Anspruchs 1 gelöst.

Mit einem solchen Hohlraumlabyrinth kann einerseits die akustische Absorptionswirksamkeit in substantieller Weise verbessert werden, resp. kann die Gesamtdicke des Montagepakets im Vergleich zu konventionellen Systemen ohne Einbusse an akustischer Absorptionswirksamkeit reduziert werden. Andererseits weisen die im wesentlichen senkrecht zur Montagefläche stehenden Wandungen der Hohlkörper ein besonders vorteilhaftes Stauchverhalten auf. Prallt ein Körper auf das Montagepaket, so stauchen diese Aufprallkräfte die im wesentlichen in Aufprallrichtung stehenden Wandungen, resp. knicken oder brechen diese Wandungen.

Es versteht sich, dass der Fachmann durch geeignete Wahl und Dimensionierung des Materials das gewünschte Stauchverhalten erzeugen kann. Für die vorliegende Anwendung ist ein Plateau-artiges Stauchverhalten erwünscht.

Weiterhin sind deshalb die Wandungen der Hohlkörper derart dimensioniert, dass diese eine Stauchung von mindestens 50% bei einer maximalen Plateauspannung von 0.5 MPa < σ < 1.2 MPa zulassen und dabei eine Aufprallenergie von ca. 0.5 MJ/m³ inelastisch vollständig in Deformationsarbeit umwandeln.

In einer weiteren Ausführungsform weist dieses Montagepaket eine mikroporöse Versteifungsschicht auf, welche einen totalen Luftströmungswiderstand von 900 Ns/m³ < Rₜ < 2000 Ns/m³, eine Biegesteifigkeit von 0.027 Nm < B < 0.275 Nm und eine Flächenmasse von 0.3 kg/m² < m_{F} < 0.7 kg/m² aufweist.

Eine solche äusserst leichte Versteifungsschicht ist für die akustische Wirksamkeit des Montagepakets wichtig. Der Luftströmungswiderstand beeinflusst das Absorptionsverhalten dieser Schicht wesentlich und kann durch die Wahl einer geeigneten offenporigen Struktur (Faservlies oder Schaum) bestimmt werden. Die relativ hohe Biegesteifigkeit dieser Schicht ist für den tieffrequenten Bereich von Bedeutung und kann in erheblichem Masse dazu beitragen, dass das gesamte Montagepaket selbsttragend ist.

Weitere Ausführungsformen des erfindungsgemässen Bausatzes und deren besondere technische Merkmale sind aus den Unteransprüchen ersichtlich.

Die Vorteile dieser akustisch wirksamen Schockabsorberanordnung sind dem Fachmann unmittelbar ersichtlich und insbesondere in der schwerschichtfreien, d.h. ultraleichten und dünnen Bauweise zu sehen.

Nachfolgend soll die Erfindung anhand einiger Ausführungsbeispiele und mit Hilfe der Figuren näher erläutert werden. Dabei zeigt:
- Fig. 1:: schematische Darstellung des erfindungsgemässen Montagepaketes und Bausatzes;
- Fig. 2:: schematische Darstellung einer Weiterbildung des erfindungsgemässen Montagepaketes und Bausatzes;
- Fig. 3a:: schematische Darstellung eines Querschnitts durch eine bevorzugte Ausführungsform der Zwischenschicht des erfindungsgemässen Montagepaketes;
- Fig. 3b:: schematische Darstellung eines Querschnitts durch eine wabenförmige Ausführungsform der Zwischenschicht des erfindungsgemässen Montagepaketes;
- Fig. 3c:: schematische Darstellung eines Querschnitts durch eine rautenförmige Ausführungsform der Zwischenschicht des erfindungsgemässen Montagepaketes;
- Fig. 3d:: schematische Darstellung eines Querschnitts durch eine prismatische Ausführungsform der Zwischenschicht des erfindungsgemässen Montagepaketes;
- Fig. 4:: Messkurve zum Stauchverhalten des erfindungsgemässen Montagepaketes;
- Fig. 5:: Messkurve zum Absorptionsverhalten des erfindungsgemässen Montagepaketes;

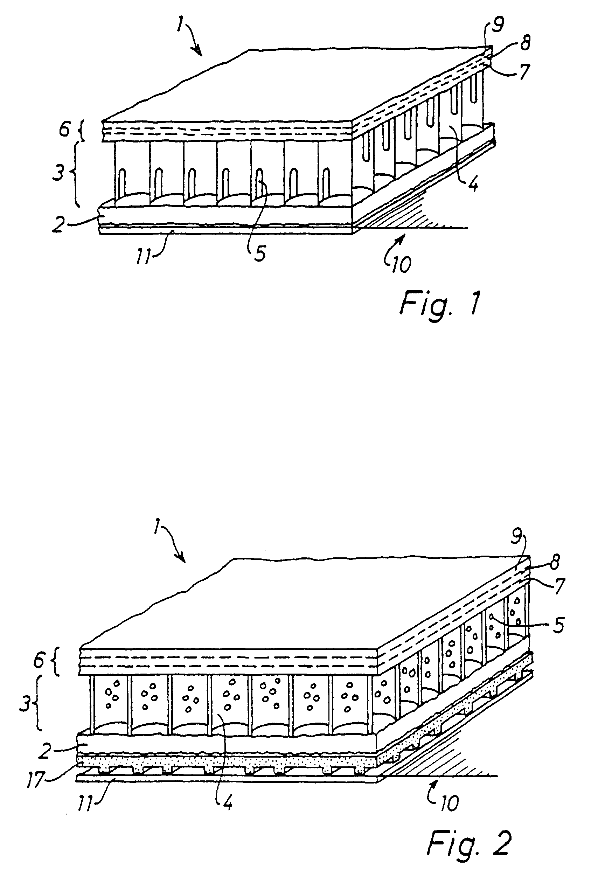

Anhand der Fig. 1 soll der Aufbau des Montagepakets und die Funktionsweise des beanspruchten Bausatzes näher erläutert werden. Das in Fig. 1 dargestellte Montagepaket 1 weist eine Auflageschicht 2 auf, die vorzugsweise aus einem porösen Vlies, insbesondere einem porösen Polypropylen-Vlies besteht. Eine Zwischenschicht 3 ist aus einer Vielzahl röhrchenförmiger Elemente 4 aufgebaut, deren Wandungen mindestens partiell geschlitzt sind, derart, dass die Hohlräume der einzelnen röhrchenförmigen Elemente 4 über diese schlitzförmigen Öffnungen 5 miteinander verbunden sind und dadurch ein zusammenhängendes Hohlraumlabyrinth bilden. Es ist wesentlich für die vorliegende Erfindung, dass die Wandungen dieser röhrchenformiger Elemente 4 im wesentlichen senkrecht zur Montagefläche 10 stehen, d.h. in Richtung eines zu erwartenden Aufpralls stehen. Diese röhrchenförmigen Elemente 4 können auch aus einem thermoplastischen Kunststoffmaterial, insbesondere einem Polyethylen hergestellt sein und weisen in einer bevorzugten Ausführungsform einen Durchmesser von 5 - 12 mm und eine Höhe von 10 - 25 mm auf. Die Wandstärke dieser röhrchenförmigen Elemente 4 ist derart gewählt, dass die Anforderungen an ein schockabsorbierendes Element im Fahrzeugbereich erfüllt werden, das heisst, diese Zwischenschicht 3 eine Aufprallenergie von ca. 90 Joules vollständig in Deformationsarbeit umwandeln kann. In einer bevorzugten Ausführungsform sind diese Röhrchen aus Polyethylen gefertigt und im oberen resp. unteren Randbereich miteinander verschmolzen. Es versteht sich, dass diese Röhrchen auch aus anderen geeigneten Materialien gefertigt sein können, bspw. aus Polypropylen, aus flammfestem Papier, Aramid, Kevlar oder Aluminium. Auf dieser Zwischenschicht 3 ist eine Abdeckschicht 6 aufgelegt, welche ebenfalls aus einem Polypropylen-Vlies gefertigt sein kann. Diese Abdeckschicht 6 kann auch aus einer Mehrzahl verschiedenartiger Lagen aufgebaut sein, und insbesondere eine stärker verpresste Vlieslage 7 aus bspw. Polypropylen, eine steife mikroporöse Lage 8 und eine Dekorlage 9 umfassen.

Diese mikroporöse Lage 8 ist wesentlich für die Erzielung einer optimalen Schallabsorption und ist als mikroporöse Versteifungsschicht ausgebildet. Im Unterschied zu herkömmlichen Abdeckschichten erzeugt die vorliegende mikroporöse Versteifungsschicht einen Luftströmungswiderstand von 900 Ns/m³ < Rₜ < 2000 Ns/m³, und insbesondere von Rₜ ≈ 1500 Ns/m³ und führt damit zu einer 60 bis 80 prozentigen Absorption für Frequenzen oberhalb 250 Hz. Zum Vergleich sei hier darauf hingewiesen, dass im Automobilbau üblicherweise verwendete, luftdurchlässige Teppiche einen Luftströmungswiderstand von Rₜ ≈ 200 Ns/m³ aufweisen. In der Regel sind diese Teppiche jedoch - zur Verbesserung der Schallisolation - mit einer luftundurchlässigen Folie oder Schaumschicht hinterlegt, womit eine wirksame Schallabsorption durch die unteren Lagen verhindert wird.
Die vorliegende mikroporöse Versteifungsschicht weist darüberhinaus vorzugsweise eine Biegesteifigkeit von 0.027 Nm < B < 0.275 Nm und eine Flächenmasse von 0.3 kg/m² < m_{F} < 0.7 kg/m².

Dieses Montagepaket 1 wird für die Lärmreduktion und Schockabsorption in Fahrzeugen auf ein Karosserieteil 11 aufgebracht, vorzugsweise nur aufgelegt. In einer bevorzugten Ausführungsform ist die Auflageschicht 2 auf ihrer dem Karosserieteil 11 zugewandten Seite reliefartig verformt. Die durch das vibrierende und schwingende Karosserieteil 11 erzeugten Luftdruckschwankungen und Luftströmungen werden im wesentlichen in der Zwischenschicht 3 absorbiert resp. aufgehoben. Insbesondere führt das mit der Zwischenschicht 3 erzeugte Hohlraumlabyrinth dazu, dass die lokal unterschiedlich starken Luftströmungen ausgeglichen und dissipiert werden. Eine zusätzliche schallabsorbierende Funktion wird durch die reliefartig verformte Auflageschicht 2 ausgeübt, indem die lokal unterschiedlich starken und gerichteten Luftströmungen im Bereich zwischen dem Karosserieteil 11 und der Auflageschicht 2 geführt werden.

Das erfindungsgemässe Montagepaket 1 unterscheidet sich von bekannten schallabsorbierenden Isolationspaketen durch die Verwendung einer steifen, aber luftdurchlässigen Zwischenschicht 3, welche so ausgebildet ist, dass die durch das Schallfeld erzeugten Luftschwingungen durch ein Hohlraumlabyrinth geführt werden.

Die in Fig. 2 dargestellte Ausführungsform des erfindungsgemässen Montagepakets 1 weist wiederum eine Zwischenschicht 3 auf, welche zwischen einer Auflageschicht 2 und einer Abdeckschicht 6 angeordnet ist. Bei dieser Ausführungsform weisen die röhrchenförmigen Elemente 4 Perforationen 5 in Form von Löchern auf und stehen die Wandungen dieser Elemente 4 im wesentlichen senkrecht zur Montagefläche 10. Durch diese Perforationen 5 entsteht in der Zwischenschicht 3 ein zusammenhängendes Hohlraumlabyrinth. Bei diesem Ausführungsbeispiel ist das gesamte Montagepaket 1 mit einer Dämpfungsschicht 17 verbunden, welche wiederum auf dem Karosserieteil 11 aufliegt. In bevorzugten Ausführungsformen ist die Dämpfungsschicht 17 eine EPDM-Schicht und ist karrosserieteilseitig strukturiert und nur lose aufgelegt. In einer weiteren Ausführungsform ist diese Dämpfungsschicht 17 mit dem Karosserieteil 11 fest verbunden und liegt die Auflageschicht 2 des Montagepakets 1 lose auf der Dämpfungsschicht 17. In dieser Ausführungsform können entweder die Auflageschicht 2 dämpfungsschichtseitig oder die Dämpfungsschicht 17 auflageschichtseitig strukturiert sein, um zwischen diesen beiden Schichten 2, 17 eine zusammenhängende Luftschicht zu erzeugen. Es versteht sich, dass in einer einfachsten Ausführungsform diese Schichten 2, 17 fest miteinander verbunden, bspw. verklebt sein können. Wie beim Ausführungsbeispiel gemäss Fig. 1 kann die Abdeckschicht 6 wiederum mehrere Lagen umfassen, vorzugsweise eine Dekorlage 9, eine mikroporöse Lage 8 und eine verpresste Vlieslage 7.

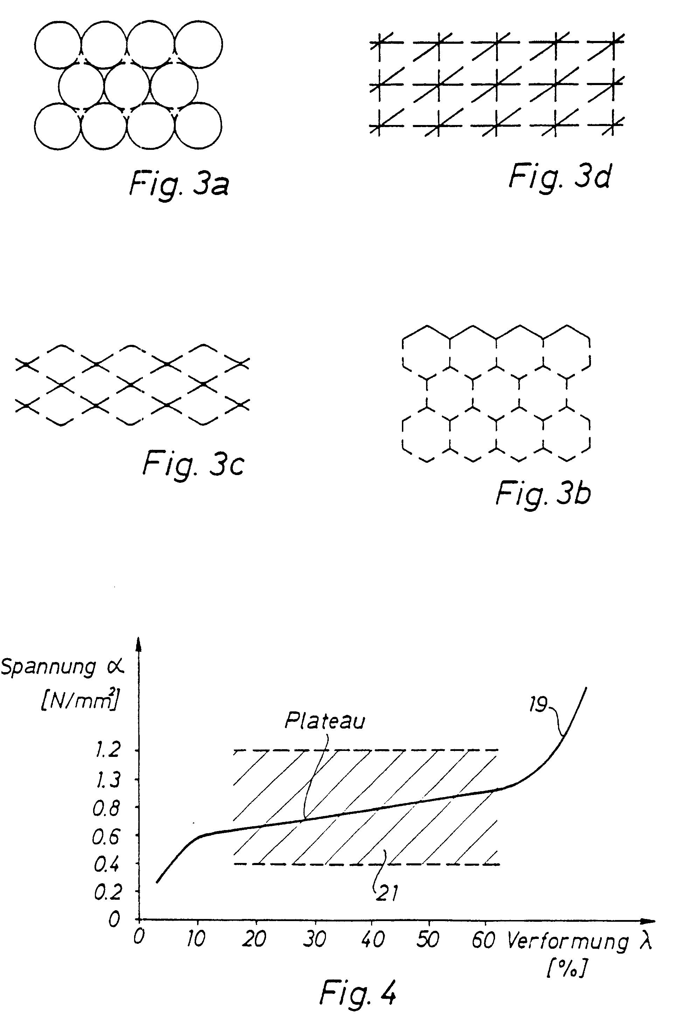

Fig. 3a zeigt einen Querschnitt durch eine erfindungsgemässe Zwischenschicht 3, welche aus einer Vielzahl zylindrischer Elemente 4 aufgebaut ist. Diese Elemente 4 sind vorzugsweise aus Polypropylen gefertigt und an ihren oberen resp. unteren Rändern miteinander verschmolzen. Dadurch entsteht eine steife und selbsttragende Schicht, die gewährleistet, dass das gesamte Montagepaket 1 unter seinem Eigengewicht seine Form beibehält. Die Perforationen 5 in dieser Zwischenschicht 3 können schlitzförmig ausgebildet sein und sich über die ganze Höhe der zylindrischen Elemente 4 erstrecken. Es versteht sich, dass anstelle solcher Schlitze auch anders geformte Perforationen vorgesehen sein können, insbesondere in Form einer Vielzahl von Löchern. Erfindungsgemäss sind die Perforationen 5 derart angeordnet, dass die einzelnen röhrchenförmigen Hohlräume 12 und die Zwischenräume miteinander in labyrinthartiger Weise verbunden sind.

Fig. 3b zeigt einen wabenförmig strukturierten Aufbau der Zwischenschicht 3. Auch bei diesem Aufbau sind die Wandungen 13 der einzelnen Waben durchbrochen und bilden die Kammern 14 ein zusammenhängendes Hohlraumlabyrinth. Auch bei dieser Ausführungsform sind die Wandungen derart dimensioniert, dass das gesamte Montagepaket den Erfordernissen einer schockabsorbierenden Fahrzeugverkleidung genügen.

Fig. 3c zeigt eine Zwischenschicht 3 mit rautenförmigen Zellen 15, die über Öffnungen 16 miteinander verbunden sind. Es versteht sich, dass der Fachmann andere aus einer Vielzahl von Kammern aufgebaute Zwischenschichten in Betracht zieht, um eine steife schockabsorbierende Schicht zu schaffen, welche durch geeignete Perforationen auch akustisch wirksam ist. Insbesondere wird der Fachmann auch eine Zwischenschicht 3 mit prismatischen Zellen 18 in Betracht ziehen, wie in Fig. 3d dargestellt und die für die jeweilige Anwendung vorteilhafteste Anordnung wählen.

Die aus Fig. 4 ersichtliche Messkurve 19 zeigt das Stauchverhalten des erfindungsgemässen Montagepaketes bei Stauchung. Dabei ist auf der Abzisse die prozentuale Verformung aufgetragen, während auf der Ordinate die ausgeübte Spannung in N/mm² aufgetragen ist. Aus dem dargestellten Verlauf der Messkurve 19 ist ersichtlich, dass bei geringen Spannungswerten unterhalb 0.5 N/mm² keine substantielle Verformung des Montagepaktes 1 und insbesondere der Zwischenschicht 3 auftritt. Bei diesen Werten können die einzelnen Röhrchen der ausgeübten Spannung elastisch ausweichen und wird eine allfällige Deformation wieder vollstandig zurückgebildet. Oberhalb dieser Spannungen beginnen die einzelnen Röhrchen zu knicken und/oder zu brechen. In diesem Plateau-Bereich wird also der wesentliche Teil der Aufprallenergie in Deformationsarbeit umgewandelt und bleibt die Spannung im wesentlichen konstant. Der Fachmann im Automobilbau kennt Schockabsorber, die ein entsprechendes Stauchverhalten aufweisen und ist ohne weiteres in der Lage, eine Zwischenschicht 3 mit dem erforderlichen Verhalten zu dimensionieren. Insbesondere kennt er die Minimalanforderungen an schockabsorbierende Bauteile und wird darauf achten, dass das Stauchverhalten innerhalb der vorgebenen Toleranzfelder 21 liegt.

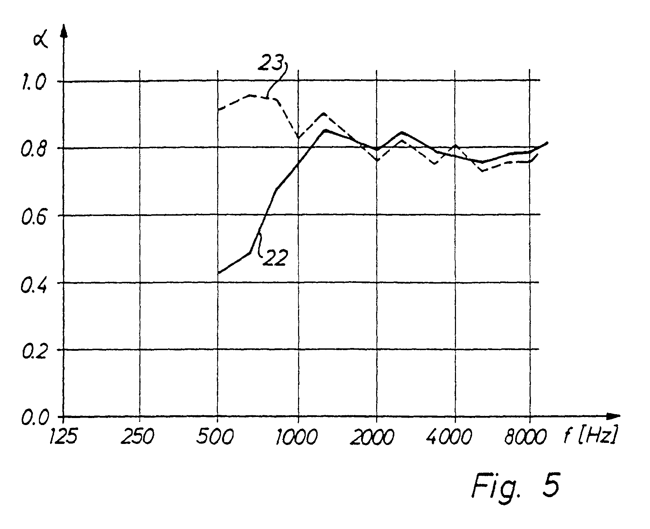

Die in Fig. 5 dargestellten Messkurven zeigen das akustische Absorptionsverhalten unterschiedlicher Ausführungsformen des erfindungsgemässen Bausatzes. So zeigt die Kurve 22 den Verlauf der frequenzabhängigen Absorption für ein Montagepaket mit einer ca. 10.5 mm hohen Zwischenschicht aus Kunststoffröhrchen mit einem Flächengewicht von ca. 730 g/m², einer mikroporösen Versteifungsschicht, insbesondere einer hochverpressten, ca. 1.4 mm dicken Faservliesschicht mit einem Flächengewicht von ca. 700 g/m² und einer Dekorschicht mit einem Flächengewicht von ca. 240 g/m². Bei dieser Ausführungsform zeigt sich, dass der Absorptionskoeffizient α für Frequenzen oberhalb 1000 Hz bei ca. 0.8 liegt, während dieser für Frequenzen unterhalb 1000 Hz kontinuierlich abfällt und bei ca. 500 Hz einen Wert von 0.4 aufweist.

Die in der gleichen Fig. 5 dargestellte Messkurve 23 zeigt das frequenzabhängige Absorptionsverhalten eines direkt auf dem Boden aufliegenden Montagepakets mit einer ca. 21 mm dicken Zwischenschicht aus Kunststoffröhrchen und einem Flächengewicht von 1240 g/m². Dieses Montagepaket weist wiederum ein hochverpresstes, ca. 1.4 mm dickes Faservlies mit ca. 700 g/m² Flächengewicht und eine Finition mit einem Flächengewicht von ca. 240 g/m². Auch bei dieser Ausführungsform liegt der Absorptionskoeffizient für Frequenzen oberhalb 1000 Hz bei ca. 0.8. Eine deutliche Verbesserung des Absorptionsverhaltens wird im Bereich unterhalb 1000 Hz ersichtlich.

Dieses Montagepaket kann überall dort eingesetzt werden, wo schock- und schallabsorbierende Eigenschaften erforderlich sind, insbesondere also in LKWs und PKWs, um den oberen Bereich der äusseren Stirnwand damit auszurüsten.

Es versteht sich von selbst, dass dieses Montagepaket beim Aufkleben versteifend wirkt und deshalb auch an anderen Fahrzeugteilen angebracht werden kann. Insbesondere also zur Verkleidung des Passagierraums, des Motor- und Gepäckraums, an den A-, B- oder C-Säulen, am Fahrzeugdach, im Crash-empfindlichen Teil des Fussraums, in der Türseitenverkleidung, im Kofferraum, im Bereich der Reserverad-Überbrückung, im Bereich der inneren und äusseren Stirnwand, etc. Diese zusätzliche Versteifung führt dazu, dass die unerwünschten Resonanzeinbrüche bei der Schallisolation in einen tieffrequenteren Bereich verschoben werden.

Je nach Anwendung kann die Hohlkörperstruktur dieses Montagepakets auch aus hitzebeständigem Papier, Kevlar, Aramid oder Aluminium gefertigt sein. Insbesondere lässt sich dieses Montagepaket in Space-Frame-Fahrzeugen einsetzen.

## Patentansprüche

1. Schwerschichtfreies und selbsttragendes Montagepaket für eine schall- und schockabsorbierende Fahrzeugverkleidung mit mindestens einer Auflageschicht (2), einer Zwischenschicht (3) und einer Abdeckschicht (6), wobei die Zwischenschicht (3) eine Vielzahl nebeneinander angeordneter Hohlkörper (4) aufweist, deren Wandungen im wesentlichen senkrecht zur Montagefläche (10) stehen, wobei die Wandungen der Hohlkörper (4) seitlich durchbrochen, vorzugsweise partiell geschlitzt sind, derart, dass dadurch ein zusammenhängendes Hohlraumlabyrinth gebildet ist
**dadurch gekennzeichnet, dass**
die Wandungen der Hohlkörper (4) derart dimensioniert sind, dass diese eine Stauchung von mindestens 50% bei einer maximalen Plateauspannung von 0.5 MPa < σ < 1.2 MPa zulasset und dabei eine Aufprallenergie von ca. 0.5 MJ/m³ inelastisch vollständig in Deformationsarbeit umwandeln.

2. Montagepaket nach Anspruch 1, **dadurch gekennzeichnet, dass** dieses eine mikroporöse Versteifungsschicht (8) umfasst, welche einen totalen Luftströmungswiderstand von 900 Ns/m³ < Rₜ < 2000 Ns/m³, eine Biegesteifigkeit von 0.027 Nm < B < 0.275 Nm und eine Flächenmasse von 0.3 kg/m² < m_{F} < 0.7 kg/m² aufweist.

3. Montagepaket nach Anspruch 1 oder 2, **dadurch gekennzeichnet, dass** die Zwischenschicht (3) eine Hohlraumstruktur aus einer Vielzahl nebeneinander angeordneter Röhrchen (4) mit einem Durchmesser von 5 bis 12 mm und einer Höhe von 5 bis 40 mm umfasst.

4. Montagepaket nach einem der Ansprüche 1 bis 2, **dadurch gekennzeichnet, dass** die Zwischenschicht (3) eine wabenförmige, insbesondere eine bienenwabenförmige, eine rautenförmige oder eine prismatische Hohlraumstruktur aufweist.

5. Montagepaket nach Anspruch 3 oder 4, **dadurch gekennzeichnet, dass** die Hohlraumstruktur aus einem Kunststoffmaterial, insbesondere einem thermoplastischen Material und vorzugsweise aus PP oder PE, gefertigt ist.

6. Montagepaket nach Anspruch 5, **dadurch gekennzeichnet, dass** die einzelnen Elemente (4) der Hohlraumstruktur mindestens stirnseitig miteinander verschmolzen sind.

7. Montagepaket nach Anspruch 3 oder 4, **dadurch gekennzeichnet, dass** die Zwischenschicht (3) aus Papier, insbesondere einem hitzebeständigen Papier, aus Kevlar, Aramid, oder Aluminium gefertigt ist.

8. Montagepaket nach einem der Ansprüche 1 bis 7, **dadurch gekennzeichnet, dass** die Auflageschicht (2) ein poröses PP-Vlies, PE-Vlies oder Mischfaservlies aus chemischen und natürlichen Fasern umfasst.

9. Montagepaket nach einem der Ansprüche 1 bis 8, **dadurch gekennzeichnet, dass** dieses eine Dämpfungsschicht (17) aufweist.

10. Ultraleichter Bausatz für die Lärmreduktion und Schockabsorption in Fahrzeugen, bei welchem mindestens ein flächiges Karosserieteil (11) und ein Montagepaket (1) mit den Merkmalen des Anspruchs 1 miteinander zusammenwirken, wobei zwischen diesem Montagepaket (1) und dem flächigen Karosserieteil (11) eine zusammenhängende Luftschicht ausgebildet ist.

11. Bausatz nach Anspruch 10, **dadurch gekennzeichnet, dass** zwischen dem Montagepaket (1) und dem flächigen Karosserieteil (11) eine Dämpfungsschicht (17) angeordnet ist.

12. Bausatz nach Anspruch 11, **dadurch gekennzeichnet, dass** die Dämpfungsschicht (17) reliefartig ausgeformt ist, derart, dass diese lediglich partiell am flächigen Fahrzeugteil anliegt und sich die zusammenhängende Luftschicht zwischen dem flächigen Karosserieteil (11) und der Dämpfungsschicht (17) bildet.

13. Ultraleichter Bausatz für die Lärmreduktion und Schockabsorption in Fahrzeugen, bei welchem mindestens ein flächiges Karosserieteil (11) und ein Montagepaket (1) mit den Merkmalen eines der Ansprüche 1 bis 9 miteinander fest verbunden sind.

14. Bausatz nach Anspruch 13, **dadurch gekennzeichnet, dass** das flächige Karosserieteil (11) ein Organoblech, ein Aluminium-Blech oder ein Kunststoffteil, insbesondere aus GMT ist.

15. Verwendung des Montagepakets nach Anspruch 1 im Passagierraum, im Motor- und Gepäckraum, insbesondere in den A-, B-, C-Säulen von Fahrzeugen, im Crash-empfindlichen Teil des Fussraums, in der Türseitenverkleidung, im Kofferraum, in der Reserverad-Überbrückung, in der inneren und äusseren Stirnwand, in der Motorhaube, in der LKW-Rückwand oder als Bodengruppe bei Space Frame Fahrzeugen und im Fahrzeugdach.

16. Verwendung des Bausatzes nach Anspruch 10 oder 13 im Crash-empfindlichen Teil des Fussraums, in der Türseitenverkleidung, im Kofferraum, in der Reserverad-Überbrückung, in der inneren und äusseren Stirnwand, in der Motorhaube, in der LKW-Rückwand oder als Bodengruppe bei Space Frame Fahrzeugen.

## Claims

1. A self-supporting fitting assembly without heavy layer for a sound- and shockabsorbing vehicle lining, having at least one base layer (2), an intermediate layer (3) and a covering layer (6), the intermediate layer (3) comprising a plurality of adjacently arranged hollow articles (4), whose walls are substantially perpendicular to the fitting surface (10), whereby the walls (4) of the hollow articles (4) are laterally perforated, preferably partially slotted, in such a way that a cohesive labyrinth of cavities is formed thereby, **characterised in that** the walls of the hollow articles (4) are dimensioned in such a way that they permit compression of at least 50 % under a maximum plateau tension of 0.5 MPa < < 1.2 MPa and convert an impact energy of approx. 0.5 MJ/m³ inelastically and completely into deformation.

2. A fitting assembly according to claim 1, **characterised in that** it comprises a microporous stiffening layer (8), which exhibits total air flow resistance of 900 Ns/m³ < R₁ < 2000 Ns/m³, flexural strength of 0.027 Nm < B < 0.275 Nm and a weight per unit area of 0.3 kg/m² < m_{F} < 0.7 kg/m².

3. A fitting assembly according to claim 1 or 2, **characterised in that** the intermediate layer (3) comprises a cavity structure consisting of a plurality of adjacently arranged tubes (4) with a diameter of from 5 to 12 mm and a height of from 5 to 40 mm.

4. A fitting assembly according to one of claims 1 to 2, **characterised in that** the intermediate layer (3) comprises an alveolate, in particular a honeycomb, a rhomboidal or a prismatic cavity structure.

5. A fitting assembly according to claim 3 or 4, **characterised in that** the cavity structure is made of a plastics material, in particular a thermoplastic, and preferably of PP or PE.

6. A fitting assembly according to claim 5, **characterised in that** the individual elements (4) of the cavity structure are fused together at least at the ends.

7. A fitting assembly according to claim 3 or 4, **characterised in that** the intermediate layer (3) is made of paper, in particular a heat-resistant paper, of kevlar, aramid or aluminium.

8. A fitting assembly according to one of claims 1 to 7, **characterised in that** the base layer (2) comprises a porous PP nonwoven, PE nonwoven or composite nonwoven of chemical and natural fibres.

9. A fitting assembly according to one of claims 1 to 8, **characterised in that** it comprises a damping layer (17).

10. An ultralight component set for noise reduction and shock absorption in vehicles, in which at least one large-area bodywork part (11) and a fitting assembly (1) having the features of claim 1 cooperate with one another, wherein a cohesive layer of air is formed between this fitting assembly (1) and the large-area bodywork part (11).

11. A component set according to claim 10, **characterised in that** a damping layer (17) is arranged between the fitting assembly (1) and the large-area bodywork part (11).

12. A component set according to claim 11, **characterised in that** the damping layer (17) is shaped in the manner of a relief, in such a way that it lies only partially against the large-area bodywork part and forms the cohesive layer of air between the large-area bodywork part (11) and the damping layer (17).

13. An ultralight component set for noise reduction and shock absorption in vehicles, in which at least one large-area bodywork part (11) and a fitting assembly (1) having the features of one of claims 1 to 9 are connected firmly together.

14. A component set according to claim 13, **characterised in that** the large-area bodywork part (11) is an advanced composite laminate, an aluminium sheet or a plastics part, in particular of GMT.

15. Use of the fitting assembly according to claim 1 in the passenger space, the engine and luggage spaces, in particular in the A-, B-, C-pillars of vehicles, in the crash-sensitive part of the foot space, in the door side panels, in the boot, in the spare wheel cover, in the inner and outer front panel, in the engine bonnet, in the heavy goods vehicle rear panel or as underbody in space frame vehicles and in the vehicle roof.

16. Use of the component set according to claim 10 or 13 in the crash-sensitive part of the foot space, in the door lining, in the boot space, in the spare wheel cover, in the inner and outer front panel, in the engine bonnet, in the heavy goods vehicle rear panel or as underbody in space frame vehicles.

## Revendications

1. Ensemble de montage autoporteur sans couche lourde pour un revêtement de véhicule à absorption acoustique et des chocs, comportant au moins une couche de revêtement (2), une couche intermédiaire (3) et une couche de recouvrement (6), la couche intermédiaire (3) comportant un grand nombre de corps creux juxtaposés (4) dont les parois sont pour l'essentiel perpendiculaire à la surface de montage (10), les parois des corps creux (4) étant interrompues latéralement, de préférence partiellement fendues, de sorte à former ainsi un labyrinthe à corps creux cohérent, **caractérisé en ce que** les parois des corps creux (4) sont dimensionnées de sorte à admettre une compression d'au moins 50% en présence d'une tension de plateau maximale de 0,5 Mpa < σ < 1,2 Mpa, transformant complètement et de manière non élastique une énergie d'impact d'environ 0,5 MJ/m³ en travail de déformation.

2. Ensemble de montage selon la revendication 1, **caractérisé en ce qu'**il englobe une couche de renforcement microporeuse (8), présentant une résistance totale au flux d'air de 900 Ns/m³ < Rₜ < 2000 Ns /m³, une résistance à la flexion de 0,027 Nm < B < 0,275 Nm et une masse surfacique de 0,3 kg/m² < M_{F} < 0,7 kg/m².

3. Ensemble de montage selon les revendications 1 ou 2, **caractérisé en ce que** la couche intermédiaire (3) englobe une structure à corps creux composée d'un grand nombre de petits tubes juxtaposés (4), d'un diamètre compris entre 5 et 12 mm et d'une hauteur comprise entre 5 et 40 mm.

4. Ensemble de montage selon l'une des revendications 1 à 2, **caractérisé en ce que** la couche intermédiaire (3) présente une structure à corps creux alvéolaire, en particulier en nid d'abeille, une structure à corps creux en losange ou prismatique.

5. Ensemble de montage selon les revendications 3 ou 4, **caractérisé en ce que** la structure à corps creux est composée d'un matériau plastique, en particulier d'un matériau thermoplastique, de préférence de PP ou de PE.

6. Ensemble de montage selon la revendication 5, **caractérisé en ce que** les différents éléments (4) de la structure à corps creux sont assemblés par fusion au moins au niveau du côté frontal.

7. Ensemble de montage selon les revendications 3 ou 4, **caractérisé en ce que** la couche intermédiaire (3) est composée de papier, en particulier de papier résistant à la chaleur, de kevlar, d'aramide ou d'aluminium.

8. Ensemble de montage selon l'une des revendications 1 à 7, **caractérisé en ce que** la couche de revêtement (2) englobe un non tissé poreux PP, un non tissé de PE ou un non tissé de fibres mixtes comportant des fibres chimiques et naturelles.

9. Ensemble de montage selon l'une des revendications 1 à 8, **caractérisé en ce qu'**il comporte une couche d'amortissement (17).

10. Module ultraléger pour assurer la réduction du bruit et l'absorption des chocs dans des véhicules, dans lequel au moins une partie plane de la carrosserie (11) et un ensemble de montage (1) présentant les caractéristiques de la revendication 1 coopèrent, une couche d'air cohérente étant formée entre cet ensemble de montage (1) et la partie plane de la carrosserie (11).

11. Module selon la revendication 10, **caractérisé en ce qu'**une couche d'amortissement (17) est agencée entre l'ensemble de montage (1) et la partie plane de la carrosserie (11).

12. Module selon la revendication 11 **caractérisé en ce que** la couche d'amortissement (17) est formée en relief, de sorte qu'elle ne repose que partiellement sur la partie plane de la carrosserie, la couche d'air cohérente étant formée entre la partie plane de la carrosserie (11) et la couche d'amortissement (17).

13. Module ultraléger pour assurer la réduction du bruit et l'absorption des chocs dans des véhicules dans lequel au moins une partie plane de la carrosserie (11) et un ensemble de montage (1) présentant les caractéristiques de l'une des revendications 1 à 9 sont fermement assemblés.

14. Module selon la revendication 13, **caractérisé en ce que** la partie plane de la carrosserie (11) est constituée par une tôle organométallique, une tôle d'aluminium ou un composé plastique, en particulier en GMT.

15. Utilisation de l'ensemble de montage selon la revendication 1 dans l'intérieur d'un véhicule, dans l'espace moteur et dans le coffre à bagages, en particulier dans les montants A, B et C de véhicules, dans la partie du plancher sensible à une collision, dans la garniture latérale des portes, dans le coffre, dans l'espace de jonction de la roue de secours, dans la paroi frontale interne et externe, dans le capot du moteur dans la paroi arrière de camions ou sous forme de groupe de fond dans des véhicules à châssis tubulaire non carrossé et dans le toit du véhicule.

16. Utilisation du module selon les revendications 10 ou 13 dans la partie du plancher sensible à une collision, dans la garniture latérale des portes, dans le coffre, dans l'espace de jonction de la roue de secours, dans la paroi frontale interne et externe, dans le capot du moteur, dans la paroi arrière de camions ou sous forme de groupe de fond dans des véhicules à châssis tubulaire non carrossé.
